# EUROPÄISCHE PATENTANMELDUNG

(11) **EP 2 431 233 A1**
(43) Veröffentlichungstag der Anmeldung: **21.03.2012**
(21) Anmeldenummer: 11179501.9
(22) Anmeldetag: 31.08.2011
(51) Int. Cl.: B60R 15/04, B61D 35/00

(54) **Sanitärkabine**

(30) Priorität: 21.09.2010 DE 102010037687
(71) Anmelder: satek gmbh, 73084 Salach (DE)
(72) Erfinder: Kaiser, Jürgen, 73084 Salach (DE)
(74) Vertreter: Kirschner, Klaus Dieter

(57) **Zusammenfassung**

Eine Sanitärkabine für den Einsatz in Fahrzeugen weist mindestens ein Urinal (20) und nur gegebenenfalls ein Waschbecken (22) auf. Alle Elektro-, Druckluft-, Frisch-, und Abwasser-Installationen sind als Funktionsbaugruppen ausgebildet und an den Innenwänden der Wandelemente (12, 13, 14) der Sanitärkabine (10) angebracht, wobei der Abwasserinstallation ein durch das Wandelement (14) der Sanitärkabine (10) nach außenführender gemeinsamer Außenflansch (27) zugeordnet ist.

## Beschreibung

Die Erfindung betrifft eine Sanitärkabine für den Einsatz in Fahrzeugen, insbesondere in Straßenfahrzeugen.

Bei Fahrzeugen mit großer Fahrgastzahl und entsprechenden Fahrzeiten sind im Fahrzeug mindestens eine Sanitärkabine erforderlich, die mit WC und Waschbecken und den zugehörigen Installationsverbindungen ausgestattet ist; vgl. EP 1 787 884 A1. Eine solche Ausbildung erfordert jedoch relativ viel Raum innerhalb des Fahrzeuges, ist aufwendig und teuer in der Herstellung und Montage sowie in der Wartung.

Der Erfindung liegt daher die Aufgabe zugrunde hier Abhilfe zu schaffen durch eine neue vorteilhafte Ausbildung einer solchen Sanitärkabine mit gesenktem Energie- und Wasserverbrauch, was zu großen Einsparungen hinsichtlich Gewicht, Bauteilen und Raumbedarf führt.

Diese Aufgabe ist erfindungsgemäß durch die Merkmale des Patentanspruchs 1 gelöst.

Weitere Merkmale der Erfindung ergeben sich aus den Unteransprüchen.

Durch Anwendung der bekannten Technik eines wasserlosen Urinals, wodurch die Nutzung einer solchen Sanitärkabine nach Funktionen getrennt wird, reduzieren sich Energie- und Wasserverbrauch wesentlich und damit die Kosten für Herstellung, Montage und Wartung. Darüber hinaus wird der Raumbedarf innerhalb des Fahrzeuges für die Sanitärkabine erheblich verringert. Durch die konsequente Durchgestaltung von Sanitärkabine und nur an den Innenwänden der Kabine angeordneten Wasser- Installationen wird eine hohe Effizienz erreicht und werden Umweltaspekten ausreichend Rechnung getragen.

Bei Anwendung von Urinal und Waschbecken innerhalb der Sanitärkabine ist dem Waschbecken ein ortsfester Wasserbehälter zuzuordnen, dass die erfinderische Sanitärkabine von ortsfester Wasserversorgung unabhängig ist.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:

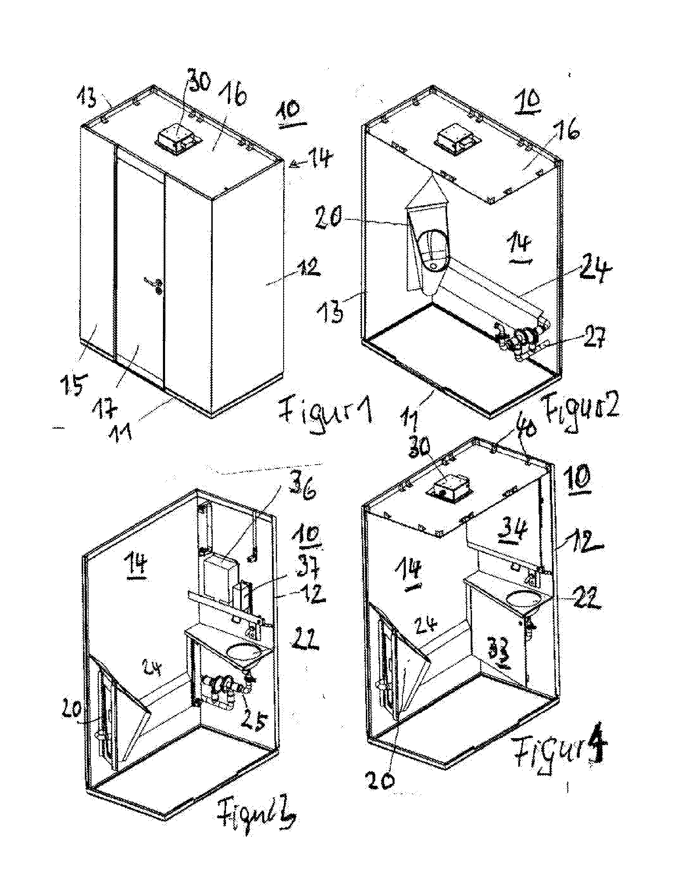

- Fig. 1: eine perspektivische Darstellung einer als Einbaueinheit ausgebildeten Sanitärkabine nach der Erfindung,
- Fig. 2: eine perspektivische Darstellung der Sanitärkabine der Figur 1, teilweise aufgeschnitten in der Ausführungsform mit wasserlosem Urinal,
- Fig. 3: eine perspektivische Darstellung der Sanitärkabine nach Figur 1, teilweise aufgeschnitten mit Waschbecken und Urinal und
- Fig. 4: die Sanitärkabine nach Figur 3 mit abnehmbar gestalteten Abdeckplatten für die Wasserinstallation.

Eine in den Figuren insgesamt mit der Bezugsziffer 10 bezeichnete Sanitärkabine ist von kastenförmig senkrecht auf einer rechteckigen Trägerplatte 11 stehenden Seitenwände bildenden Wandelementen 12, 13, 14,15 und einem Beckenelement 16 sowie einer Tür 17 gebildet und umfasst gegebenenfalls ein Waschbecken 22.

Die Wandelemente 12, 13 und 14 haben raumbildenden Charakter und bestehen aus ebenen Platten von geeignetem Material.

Bei der Ausbildung mit wasserlosem Urinal 20 sind die Bauteile der Abwasserinstallation 24 an der Innenseite des Wandelements 14 angeordnet, bei der Ausbildung mit Waschbecken 22 sind dieses und deren Abwasserinstallation 25 an der Innenseite des Wandelements 12 angeordnet. Beide Installationen führen zu einem gemeinsamen durch das Wandelement 14 geführten Anschlussflansch 27.

Das Beckenelement 16 trägt einen Anschlusskasten 30 für die Zufuhr von elektrischer Energie und Frischluft.

Schließlich sind Abdeckblenden 32 für die Installationsbauteile des Urinals 20 vorgesehen. Bei der Ausbildung mit Waschbecken 22 sind zusätzlich plattenförmige Blenden 33 und 34 vorgesehen, die lösbar an der Innenwandung des Wandelements 12 befestigt sind.

Dem Waschbecken 22 sind ein an der Innenseite des Wandelements 12 befestigter Wasserbehälter 36 und ein entsprechender Seifenspender 37 zugeordnet, die von der lösbaren Abdeckplatte 33 abgedeckt sind. Die Abwasserinstallation 25 des Waschbecken 20 führt ebenfalls zu dem gemeinsamen Anschlussflansch 27, der die Abführung der Abwässer durch das Wandelement 14 ermöglicht. Die Befestigung der Wandelemente 12, 13, 14 und 15 an der Bodenplatte 11 und an der Deckenplatte 16 erfolgt in an sich bekannter Weise durch Winkelelemente 40.

### Bezugszeichenliste

- 10: Sanitärkabine
- 11: Bodenplatte
- 12: Wandelement
- 13: Wandelement
- 14: Wandelement
- 15: Wandelement
- 16: Deckenplatte
- 17: Tür
- 20: Urinal
- 22: Waschbecken
- 24: Abwasser- Installation
- 25: Abwasser- Installation
- 27: Anschlussflansch
- 30: Anschlusskasten
- 32: Abdeckblende
- 33: Blende
- 34: Blende
- 36: Wasserspeicher
- 37: Seifenspender
- 40: Winkelelemente

## Patentansprüche

1. Sanitärkabine (10) für den Einsatz in Fahrzeugen mit mindestens einem Urinal (20) und gegebenenfalls mit einem Waschbecken (22) sowie einer Elektro-, Druckluft-, Frisch-, und Abwasser- Installation (24, 25, 30), die als Funktionsbaugruppen ausgebildet und an den Innenwänden der Wandelemente (12, 13, 14, 15) der Sanitärkabine (10) angebracht sind, wobei der Abwasserinstallation ein durch eine Wandung der Sanitärkabine nach ausführender gemeinsamer Anschlussflansch (27) ungeordnet ist.

2. Sanitärkabine nach Anspruch 1, **dadurch gekennzeichnet, dass** diese einen rechteckigen Querschnitt mit kastenförmig aufgerichteten aus Plattenelementen bestehenden Wänden (12, 13, 14, 15) sowie eine Boden- und eine Deckenplatte (11, 16) aufweist, dass das Urinal (20) zwischen einem schmalen und einem breiten Wandelement (13, 14) angeordnet ist, dass der Elektroinstallation ein auf der Außenwandung der Deckplatte (16) angeordneter Anschlusskasten (30) sowie eine an dem breiten Wandelement (15) der Sanitärkabine (10) befindliche Zugangstür (17) zugeordnet sind.

3. Sanitärkabine nach den Ansprüchen 1 und 2, **dadurch gekennzeichnet, dass** das Urinal (20) als wasserloses Urinal ausgebildet ist.

4. Sanitärkabine nach den Ansprüchen 1 bis 3, **dadurch gekennzeichnet, dass** die an deren Innenwandungen angebrachten als Rohrleitungen ausgebildeten Installationsverbindungen durch damit korrespondierende Blenden (24, 33, 34) abgedeckt sind.

5. Sanitärkabine nach den Ansprüchen 1 bis 4, **dadurch gekennzeichnet, dass** bei der Ausbildung der Sanitärkabine (10) mit einem Waschbecken (22) und einem Urinal (20) das Waschbecken (22) und das Urinal (20) etwa gegenüberliegend angeordnet ist.

6. Sanitärkabine nach den Ansprüchen 1 bis 5, **dadurch gekennzeichnet, dass** dem Waschbecken (22) ein eigener ortsfester Wasserspeicher (36) zugeordnet ist.
